# FASCICULE DE BREVET EUROPEEN

(11) **EP 2 668 096 B1**
(45) Date de publication et mention de la délivrance du brevet: **20.01.2016**
(21) Numéro de dépôt: 12700987.6
(22) Date de dépôt: 24.01.2012
(51) Int. Cl.: B64C 13/10, B64C 13/22

(54) **DISPOSITIF D'ACTIONNEMENT D'UN EQUIPEMENT PILOTABLE AUTOMATIQUEMENT OU MANUELLEMENT AVEC DETECTION DE LA REPRISE DU PILOTAGE MANUEL**
VORRICHTUNG ZUR FESTSTELLUNG DES ÜBERGANGS VON EINER SERVO- ZUR MANUELLEN STEUERUNG
MANUAL OVERRIDE DETECTION SYSTEM IN A POWERED CONTROL SYSTEM

(30) Priorité: 24.01.2011 FR 1150527
(43) Date de publication de la demande: 04.12.2013
(73) Titulaire: SAGEM DEFENSE SECURITE, 92100 Boulogne Billancourt (FR)
(72) Inventeur: CREMIERE, Benoît, 92100 Boulogne-Billancourt (FR)
(74) Mandataire: Lavialle, Bruno François Stéphane
(86) Numéro de dépôt international: PCT/EP2012/051051
(87) Numéro de publication internationale: WO 2012/101122

(56) Documents cités:
- EP-A1- 1 104 740
- EP-A1- 2 033 892

## Description

La présente invention concerne un dispositif d'actionnement ou actionneur notamment d'un équipement de commande de vol. L'actionneur appartient par exemple à un aéronef tel qu'un hélicoptère et peut comprendre plusieurs pièces mobiles comme un moteur électrique. L'actionneur est par exemple un compensateur ou TRIM.

L'état de l'art est illustré par le document EP-A-1104740.

Un tel actionneur comprend généralement un moteur électrique qui est agencé pour être raccordé à un dispositif de pilotage automatique et qui est relié par une chaîne de transmission à l'arbre de sortie de l'actionneur lui-même destiné à être relié à un instrument de commande tel qu'un levier et/ou aux gouvernes de l'aéronef. La chaîne de transmission incorpore un réducteur divisant la chaîne de transmission en un tronçon à haute vitesse du coté du moteur et un tronçon à basse vitesse du coté de l'arbre de sortie de l'actionneur.

Le tronçon à haute vitesse comporte un organe de friction magnétique auquel le moteur est relié par un système à roue et vis sans fin, et un organe d'accouplement intermédiaire de type embrayage ou roue libre.

Le tronçon à basse vitesse comprend un organe de désactivation du dispositif de pilotage automatique, l'organe de désactivation comportant :
- un premier plateau solidaire d'un des éléments du réducteur,
- un deuxième plateau relié à l'organe d'embrayage,
- un ressort de torsion reliant les plateaux pour autoriser un décalage angulaire du premier plateau par rapport au deuxième plateau lorsque le couple à transmettre atteint un seuil prédéterminé,
- des commutateurs reliés au dispositif de pilotage automatique et coopérant avec les plateaux en décalage angulaire pour permettre la détection dudit décalage angulaire.

En mode pilotage automatique, le moteur électrique va être l'élément moteur de la chaîne de transmission tandis qu'en pilotage manuel l'instrument de commande est le moteur de la chaîne de transmission. Lors du passage du mode automatique au mode manuel, il est important que la reprise du pilotage par le pilote soit détectée le plus tôt possible afin d'éviter que le dispositif de pilotage automatique ne vienne s'opposer au pilote. L'organe de désactivation du dispositif de pilotage automatique doit donc signaler au dispositif de pilotage automatique la reprise du pilotage par le pilote dès que celui-ci produit un effort s'opposant à celui exercé par le dispositif de pilotage automatique, c'est-à-dire dès qu'apparaît un décalage angulaire entre les plateaux. Or, la structure actuelle de l'organe de désactivation qui doit en outre assurer la transmission de couples importants rend délicate et coûteuse l'obtention d'une telle précision.

Un but de l'invention est de fournir un moyen remédiant à l'inconvénient précité.

A cet effet, on prévoit, selon l'invention, un dispositif d'actionnement d'un équipement, comprenant un moteur électrique qui est agencé pour être raccordé à un dispositif de pilotage automatique et qui est relié par une chaîne de transmission à un arbre de sortie du dispositif d'actionnement lui-même destiné à être relié à un instrument de commande et/ou à l'équipement, la chaîne de transmission incorporant un réducteur divisant la chaîne de transmission en un tronçon à haute vitesse du côté du moteur et un tronçon à basse vitesse du côté de l'arbre de sortie du dispositif d'actionnement. Le tronçon à haute vitesse comprend un organe de désactivation du dispositif de pilotage automatique. L'organe de désactivation comporte :
- un premier élément solidaire d'une première partie du tronçon à haute vitesse,
- un deuxième élément solidaire d'une deuxième partie du tronçon à haute vitesse et relié au premier élément pour autoriser un décalage angulaire du premier élément par rapport au deuxième élément lorsqu'un couple à transmettre atteint un seuil prédéterminé,
- un organe de détection du décalage angulaire relié au dispositif de pilotage automatique.

Le premier élément et le deuxième élément sont des plateaux en regard l'un de l'autre et reliés l'un à l'autre par un élément de liaison en rotation partiellement débrayable. Le premier plateau est pourvu de premières pistes conductrices auxquelles est rattachée une première extrémité de lames ayant une seconde extrémité frottant sur une piste conductrice s'étendant sur une face du second plateau opposée au premier plateau. L'organe de détection comprend un collecteur fixe comportant des balais frottant sur des deuxièmes pistes conductrices du premier plateau.

Ainsi, l'organe de désactivation se trouve dans le tronçon de la chaîne de transmission dans lequel le couple est le plus faible et l'amplitude de la rotation est la plus importante pour un déplacement donné de l'instrument de commande. La détection précise d'un décalage angulaire est de la sorte facilitée.

La détection du décalage angulaire est en outre alors effectuée de manière simple par l'établissement d'un contact électrique entre les éléments en mouvement relatif de l'organe de désactivation. Cette structure de l'organe de détection permet en outre de s'affranchir de manière particulièrement simple de la principale contrainte s'exerçant sur l'alimentation électrique desdits éléments du fait de leur montage dans le tronçon à haute vitesse, à savoir l'ampleur des rotations des éléments de ce tronçon.

D'autres caractéristiques et avantages de l'invention ressortiront à la lecture de la description qui suit de modes de réalisation particuliers non limitatifs de l'invention.

Il sera fait référence aux dessins annexés, parmi lesquels :

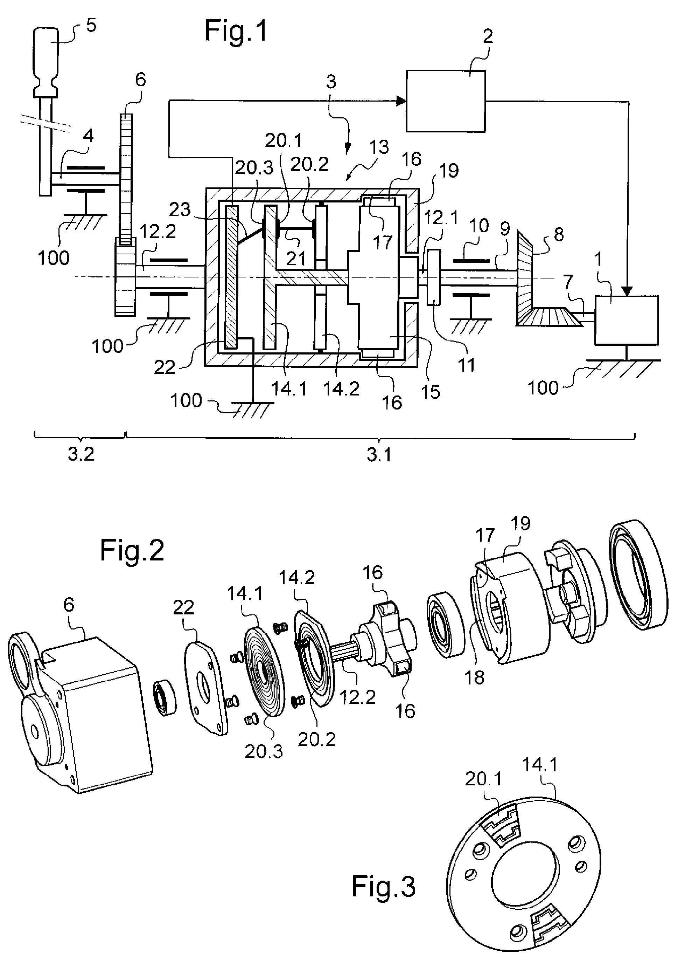

- la figure 1 est une vue schématique en élévation du dispositif d'actionnement conforme à l'invention,
- la figure 2 est une vue en perspective éclatée de l'organe de désactivation,
- la figure 3 est une vue schématique partielle de détail de l'organe de désactivation.

L'invention ici décrite et représentée sur les figures ci-dessus est un dispositif d'actionnement d'un aéronef et plus particulièrement un dispositif de TRIM.

Le dispositif d'actionnement conforme à l'invention est ainsi destiné à être embarqué dans l'aéronef et relié à l'équipement commandé comportant par exemple des surfaces mobiles de l'aéronef. L'invention ne concerne pas la liaison du dispositif d'actionnement aux-dites surfaces mobiles, qui est réalisée de manière classique, de sorte que cette partie n'est pas détaillée ici.

Le dispositif d'actionnement de l'invention comprend un bâti 100 auquel est fixé un moteur électrique 1 raccordé à un dispositif de pilotage automatique 2 et qui est relié par une chaîne de transmission, généralement désignée en 3, à un arbre de sortie 4 lui-même relié à un instrument de commande 5.

La chaîne de transmission 3 incorpore un réducteur 6 divisant la chaîne de transmission 3 en un tronçon à haute vitesse 3.1 du côté du moteur 1 et un tronçon à basse vitesse 3.2 du côté de l'arbre de sortie 4 du dispositif d'actionnement.

Le tronçon à haute vitesse 3.1 comporte une vis sans fin 7 qui est solidaire de l'arbre de sortie du moteur 1 et qui engrène avec une roue dentée 8 montée sur un premier arbre intermédiaire 9. Le premier arbre intermédiaire 9 traverse un organe de friction 10 pour rejoindre une extrémité d'un organe d'accouplement 11 ayant une extrémité opposée reliée à un deuxième arbre intermédiaire 12 relié à l'étage haute vitesse du réducteur 6 dont l'étage basse vitesse est relié à l'arbre de sortie 4 du dispositif d'actionnement formant ainsi ensemble le tronçon à basse vitesse 3.2. Les arbres constituant la chaîne de transmission 3 sont montés sur le bâti 100 de façon connue en elle-même par l'intermédiaire de paliers assurant leur guidage en rotation. L'ensemble roue dentée 8 et vis sans fin 7 permet une transmission irréversible du mouvement du moteur 1 vers l'arbre intermédiaire 9. L'organe à friction 10, est connu en lui-même et a pour fonction d'opposer une résistance au pivotement de l'arbre intermédiaire 9 et donc de toute la chaîne de transmission 3 et de l'instrument de commande 5. Ceci permet d'améliorer les sensations du pilote lors du pilotage et de maintenir la position de l'instrument de commande 5 en l'absence d'un effort exercé par le pilote ou le moteur 1 sur la chaîne de transmission 3. L'organe d'accouplement 11 est également connu en lui-même, par exemple de type à embrayage ou roue libre, et permet de limiter l'influence qu'aurait sur la chaîne de transmission 3 un vent de travers continu.

Le tronçon à haute vitesse 3.1 comprend en outre un organe de désactivation 13 du dispositif de pilotage automatique 2. L'arbre intermédiaire 12 comprend ici deux parties 12.1, 12.2 entre lesquelles est monté l'organe de désactivation 13 qui comporte :
- un premier plateau 14.1 solidaire de la première partie 12.1,
- un deuxième plateau 14.2 solidaire de la deuxième partie 12.2 et relié au premier plateau 14.1 pour autoriser un décalage angulaire du premier plateau 14.1 par rapport au deuxième plateau 14.2 lorsque le couple à transmettre atteint un seuil prédéterminé. Un tel couple apparaît lorsque le pilote automatique 2 est actif et commande un mouvement de la chaîne de transmission 3 via le moteur 1, et que le pilote agit sur l'instrument de commande 5 en s'opposant au mouvement en question.

La transmission de couple jusqu'au seuil prédéterminé est assurée par un système à galets presseurs. Ce système comprend une roue 15 à galets presseurs périphériques 16, dont est solidaire le plateau 14.1 et dont les galets 16 sont en appui radial contre une surface cylindrique 17 appartenant à un support 19 solidaire du plateau 14.2. La surface cylindrique 17 comporte des logements 18 pour recevoir une portion des galets 16. Les galets 16 restent dans les logements 18, liant les plateaux en rotation, tant que le couple transmis est inférieur au seuil prédéterminé. Lorsque le couple à transmettre est supérieur au seuil prédéterminé, la rotation de la roue 15 et la résistance à la rotation du support de la surface cylindrique 17 (ou l'inverse) force les galets 16 à sortir des logements 18 autorisant dès lors un décalage angulaire des plateaux 14.1, 14.2.

L'organe de désactivation 13 comprend un organe de détection du décalage angulaire qui est relié au dispositif de pilotage automatique 2 et qui fonctionne par établissement de contacts électriques entre des pistes conductrices portées par les plateaux 14.1, 14.2.

Le plateau 14.1 possède ainsi, d'une part, en regard du plateau 14.2, une surface sur laquelle s'étendent des pistes conductrices 20.1 et d'autre part, du coté opposé, un second ensemble de pistes conductrices 20.3. Les pistes conductrices 20.1 et 20.3 sont reliées une à une électriquement.

Le plateau 14.2 possède lui, en regard des pistes 20.1 du plateau 14.1, une surface sur laquelle s'étendent des pistes conductrices 20.2.

Le plateau 14.1 est en outre pourvu de lames 21 qui comportent chacune une extrémité libre frottant sur les pistes conductrices 20.2 du plateau 14.2 et une extrémité opposée reliée à une des pistes conductrices 20.1 s'étendant sur le plateau 14.1.

L'organe de détection comprend un collecteur fixe 22 qui est solidaire du bâti 100 et qui comporte des balais 23 frottant sur les pistes conductrices 20.3 du premier plateau 14.1.

Les balais 23 sont raccordés au pilote automatique 2 et sont soumis à une différence de potentiels. Les pistes conductrices 20.1, 20.2 sont agencées pour que lorsque les plateaux se décalent angulairement l'un par rapport à l'autre les lames 21 établissent des contacts électriques entre les pistes conductrices 20.1, 20.2 autorisant le passage d'un courant entre les balais 23. Le pilote automatique 2 est ainsi informé que le pilote s'oppose au mouvement que le pilote automatique 2 a commandé et se désactive jusqu'à ce que le pilote l'active à nouveau.

Bien entendu, l'invention n'est pas limitée au mode de réalisation décrit mais englobe toute variante entrant dans le champ de l'invention telle que définie par les revendications.

En particulier, l'organe de désactivation peut avoir une structure différente de celle décrite et comprendre par exemple au lieu du système à galets presseurs une barre de torsion ou similaire.

Le dispositif d'actionnement peut également avoir une structure différente de celle décrite, notamment en ce qui concerne le positionnement ou la présence des différents éléments constituant la chaîne de transmission.

L'organe de friction peut être un organe à bande.

## Revendications

1. Dispositif d'actionnement d'un équipement, comprenant un moteur électrique (1) qui est agencé pour être raccordé à un dispositif de pilotage automatique (2) et qui est relié par une chaîne de transmission (3) à un arbre de sortie (4) lui-même destiné à être relié à un instrument de commande (5), la chaîne de transmission incorporant un réducteur (6) divisant la chaîne de transmission en un tronçon à haute vitesse (3.1) du côté du moteur et un tronçon à basse vitesse (3.2) du côté de l'arbre de sortie, **caractérisé en ce que** le tronçon à haute vitesse comprend un organe de désactivation (13) du dispositif de pilotage automatique, l'organe de désactivation comportant :
- un premier élément (14.1) solidaire d'une première partie (12.1) du tronçon à haute vitesse,
- un deuxième élément (14.2) solidaire d'une deuxième partie (12.2) du tronçon à haute vitesse et relié au premier élément pour autoriser un décalage angulaire du premier élément par rapport au deuxième élément lorsqu'un couple à transmettre atteint un seuil prédéterminé,
- un organe de détection (19) du décalage angulaire destiné à être
relié au dispositif de pilotage automatique, le premier élément et le deuxième élément étant des plateaux en regard l'un de l'autre et reliés l'un à l'autre par un élément de liaison en rotation partiellement débrayable, à savoir un premier plateau (14.1) pourvu, d'un coté de pistes conductrices (20.1) et de l'autre d'un second ensemble de pistes conductrices (20.3) et un deuxième plateau (14.2) équipé sur sa face en regard du premier plateau (14.1) d'un ensemble de pistes conductrices (20.2), les pistes conductrices (20.1,20.3) du premier plateau étant reliées une à une électriquement ainsi qu'à une première extrémité de lames conductrices (21) ayant une extrémité opposée frottant sur les pistes (20.2) du second plateau, l'organe de détection comprenant un collecteur fixe (22) solidaire d'un bâti (100) comportant des balais (23) frottant sur le deuxième ensemble de pistes conductrices (20.3) du premier plateau (14.1).

2. Dispositif selon la revendication 1, dans lequel l'élément de liaison en rotation partiellement débrayable est un système à galets presseurs (15, 16, 17, 18).

3. Dispositif selon la revendication 1, dans lequel le tronçon à haute vitesse (3.1) comporte un organe de friction (10) et un organe d'accouplement intermédiaire (11).

4. Dispositif selon la revendication 3, dans lequel l'organe de friction (10) est un organe à bande.

5. Dispositif selon la revendication 3, dans lequel l'organe d'accouplement (11) est un organe à embrayage ou roue libre.

6. Système de commande de vol d'un aéronef, comprenant au moins un instrument de commande, un dispositif de pilotage automatique et un dispositif d'actionnement d'un équipement de commande de vol, **caractérisé en ce que** le dispositif d'actionnement est conforme à au moins l'une quelconque des revendications précédentes.

## Patentansprüche

1. Vorrichtung zur Betätigung einer Einrichtung, umfassend einen Elektromotor (1), der so ausgebildet ist, dass er an eine Selbststeuerungsvorrichtung (2) angeschlossen werden kann, und der über eine Übertragungskette (3) mit einer Abtriebswelle (4) verbunden ist, die selbst dazu bestimmt ist, mit einem Steuerinstrument (5) verbunden zu werden, wobei die Übertragungskette ein Untersetzungsgetriebe (6) einschließt, das die Übertragungskette in einen Abschnitt (3.1) mit hoher Geschwindigkeit auf der Seite des Motors und in einen Abschnitt (3.2) mit niedriger Geschwindigkeit auf der Seite der Abtriebswelle unterteilt, **dadurch gekennzeichnet, dass** der Abschnitt mit hoher Geschwindigkeit ein Deaktivierungselement (13) zur Deaktivierung der Selbststeuerungsvorrichtung umfasst, wobei das Deaktivierungselement umfasst:
- ein fest mit einem ersten Teil (12.1) des Abschnitts mit hoher Geschwindigkeit verbundenes erstes Element (14.1),
- ein fest mit einem zweiten Teil (12.2) des Abschnitts mit hoher Geschwindigkeit verbundenes zweites Element (14.2), das mit dem ersten Element verbunden ist, um einen Winkelversatz des ersten Elements gegenüber dem zweiten Element zu gestatten, wenn ein zu übertragendes Drehmoment einen vorgegebenen Schwellwert erreicht,
- ein Erfassungselement (19) zum Erfassen des Winkelversatzes, das dazu bestimmt ist, mit der Selbststeuerungsvorrichtung verbunden zu werden, wobei das erste Element und das zweite Element einander gegenüberliegende Platten sind, die miteinander über ein teilweise ausrückbares Drehverbindungselement verbunden sind, nämlich eine erste Platte (14.1), die auf einer Seite mit Leiterbahnen (20.1) und auf der anderen Seite mit einen zweiten Anordnung aus Leiterbahnen (20.3) versehen ist, sowie eine zweite Platte (14.2), die auf ihrer der ersten Platte (14.1) gegenüberliegenden Seite mit einer Anordnung aus Leiterbahnen (20.2) versehen ist, wobei die Leiterbahnen (20.1, 20.3) der ersten Platte einzeln elektrisch verbunden sind, sowie mit einem ersten Ende von leitenden Klingen (21), die ein entgegengesetztes Ende haben, das an den Bahnen (20.2) der zweiten Platte reibt, wobei das Erfassungselement einen feststehenden Kollektor (22) umfasst, der fest mit einem Gestell (100) verbunden ist, das Bürsten (23) umfasst, die an der zweiten Anordnung aus Leiterbahnen (20.3) der ersten Platte (14.1) reiben.

2. Vorrichtung nach Anspruch 1, wobei das teilweise ausrückbare Drehverbindungselement ein System mit Andruckrollen (15, 16, 17, 18) ist.

3. Vorrichtung nach Anspruch 1, wobei der Abschnitt (3.1) mit hoher Geschwindigkeit ein Reibelement (10) und ein Zwischenkupplungselement (11) umfasst.

4. Vorrichtung nach Anspruch 3, wobei das Reibelement (10) ein Bandelement ist.

5. Vorrichtung nach Anspruch 3, wobei das Kupplungselement (11) ein Kupplungs- oder Freilauforgan ist.

6. Steuersystem zur Flugsteuerung eines Luftfahrzeugs, umfassend mindestens ein Steuerinstrument, eine Selbststeuerungsvorrichtung und eine Betätigungsvorrichtung zur Betätigung einer Flugsteuereinrichtung, **dadurch gekennzeichnet, dass** die Betätigungseinrichtung gemäß mindestens einem der vorhergehenden Ansprüche ausgebildet ist.

## Claims

1. An actuator device for actuating equipment, the device comprising an electric motor (1) that is arranged to be connected to an autopilot device (2) and that is connected by a drivetrain (3) to an outlet shaft (4), itself designed to be linked to a control instrument (5), the drivetrain incorporating stepdown gearing (6) dividing the drivetrain into a high-speed segment (3.1) beside the motor and a low-speed segment (3.2) beside the outlet shaft, the device being **characterized in that** the high-speed segment includes a deactivator member (13) for deactivating the autopilot device, the deactivator member comprising:
· a first element (14.1) secured to a first portion (12.1) of the high-speed segment;
· a second element (14.2) secured to a second portion (12.2) of the high-speed segment and connected to the first element in order to allow the first element to be angularly offset relative to the second element when a torque for transmission reaches a predetermined threshold; and
· a detector member (19) for detecting the angular offset, said detector member being designed to be connected to the autopilot device, the first element and the second element being mutually facing plates that are connected to each other by a partially declutchable rotary link element, namely a first plate (14.1) provided on one side with conductive tracks (20.1) and on its other side with a second set of conductive tracks (20.3), and a second plate (14.2) fitted on its face facing the first plate (14.1) with a set of conductive tracks (20.2), the conductive tracks (20.1, 20.3) of the first plate being electrically connected one by one as well as to a first ends of conductive blades (21) having opposite ends rubbing against the tracks (20.2) of the second plate, the detector member including a stationary collector (22) secured to a structure (100) including brushes (23) rubbing against the second set of conductive tracks (20.3) of the first plate (14.1).

2. A device according to claim 1, wherein the partially declutchable rotary link element is a system of presser rollers (15, 16, 17, 18).

3. A device according to claim 1, wherein the high-speed segment (3.1) includes a friction member (10) and an intermediate coupling member (11).

4. A device according to claim 3, wherein the friction member (10) is a strip member.

5. A device according to claim 3, wherein the coupling member (11) is a clutch member or a freewheel.

6. Flight control system of an aircraft, comprising at least one control instrument, an autopilot device and a device for actuating a flight control equipment, **characterized in that** the actuating device conforms to at least any preceding claim.
